# EUROPEAN PATENT SPECIFICATION

(11) **EP 3 357 807 B1**
(45) Date of publication and mention of the grant of the patent: **26.06.2019**
(21) Application number: 17209541.6
(22) Date of filing: 21.12.2017
(51) Int. Cl.: B64C 3/26, B64C 29/00, B64C 3/18

(54) **ADHESIVELY JOINING AIRFRAME MEMBERS AT SOLID INSERT**
HAFTVERBINDUNG VON FLUGWERKELEMENTEN AN MASSIVEN EINSÄTZEN
ASSEMBLAGE PAR COLLAGE DES ÉLÉMENTS DE CELLULE D'AÉRONEF À INSERT SOLIDE

(30) Priority: 03.02.2017 US 201715424095; 22.05.2017 US 201715601658
(43) Date of publication of application: 08.08.2018
(73) Proprietor: Bell Helicopter Textron Inc., Fort Worth, TX 76101 (US)
(72) Inventor: KOOIMAN, James Everett, Fort Worth, TX 76109 (US); DECKER, George Ryan, Mansfield, TX 76063 (US); STANNEY, Keith Alan, Dallas, TX 75238 (US); CHRIS, Robert Mark, Dallas, TX 75254 (US)
(74) Representative: Barker Brettell LLP

(56) References cited:
- EP-A2- 2 703 283
- WO-A2-2008/100299
- US-A- 3 020 986
- US-A- 4 416 349
- US-A1- 2004 055 248
- US-A1- 2008 128 553

## Description

### TECHNICAL FIELD OF THE DISCLOSURE

The present disclosure relates, in general, to airframe members formed from lightweight, high stiffness structural panels and, in particular, to airframe members formed from large cell core stiffened panels having solid inserts at load points that provide joining locations for coupling the airframe members with other airframe structures.

### BACKGROUND

US 4,416,349 (A) discloses viscoelastically damped reinforced skin structures wherein a sandwich skin having a relatively thick core is supported by structural elements, such as stringers and frames. A main skin is supported by stringers that are in turn supported by frames. The skin, stringers and frames are securely attached to one another by any suitable means, such as a bonding adhesive, rivets, bolts, etc. Located between the stringers are core layers formed of honeycomb or foam materials. A first plate overlies each core layer and extends to the flanges of the adjacent stringer. A second plate overlies each adjacent pair of first plates. The core layer is viscoelastically attached to the skin and the first plate; and, the first plate is viscoelastically attached to the stringer flanges and to the second plate. Alternatively, a single plate can overlie the core layers and the stringers. The main skin may be located between the stringers and the frames; and, is securely attached thereto. An outer skin is viscoelastically attached to the stringers and to core layers. The core layers are located between the main and outer skin, and pairs of adjacent stringers. The core layers are also viscoelastically attached to the main skin.

The airframes of modern aircraft are constructed from a wide variety of materials, including steel, aluminum and composites. While most airframe components are made from strong, rigid materials, in order to conserve weight, certain airframe components are made from relatively thin material layers attached to stiffening structures such as stringers. For example, the wing of a conventional tiltrotor aircraft includes a torque box structure formed from an upper skin, a lower skin, a forward spar and an aft spar. The upper and lower skins have stringers attached thereto that extend generally parallel with the longitudinal axis of the wing to provide stiffness and support to the skins. The stringers may have an I-beam cross section and are typically connected to the interior surface of the skins at reinforcement strips that provide support for the skins against catastrophic buckling, help to maintain the shape and contour of the skins, provide stiffness at the stringer load points and distribute pressure into the skins. In addition, the torque box structure typically includes multiple internal support members that provide horizontal structural strength to the forward and aft spars and the upper and lower skins.

It has been found, however, that the assembly of the torque box structure for conventional tiltrotor aircraft wings is complex and requires very tight tolerances. For example, the installation of numerous fasteners to the skins and other structural components is difficult and time consuming due to limited access to small interior spaces and complicated sealing requirements. Also, once the structural members are assembled, numerous foam details must be positioned between the structural members in the fuel bays to provide a smooth, ramped surface for the fuel components housed therein. In addition, it has been found, that the thickness of stringers as well as the multiple internal support members reduce the space available for fuel and other internal systems within the torque box structure.

### SUMMARY

According to the present disclosure, there is provided an airframe assembly according to claim 1. Optionally features of the airframe assembly are set out in the dependent claims.

In a first aspect, the present disclosure is directed to a core stiffened panel that includes a first skin and a second skin. A large cell core is joined between the first and second skins. A solid insert having a side surface is also joined between the first and second skins such that at least a portion of the side surface is adjacent to the large cell core.

In some embodiments, the large cell core is joined to the adjacent portion of the side surface of the solid insert. In certain embodiments, the large cell core may be formed from an array of cells having a width of between about 0.0127 m (0.5 inches) and about 0.0381 m (1.5 inches) and a thickness of between about 0.00635 m (0.25 inches) and about 0.01905 m (0.75 inches). In some embodiments, the large cell core may be a large cell composite core such as a large cell carbon core. In certain embodiments the first skin, the second skin and the solid insert may be formed from a composite materials such as a carbon composite material such that the first skin, the second skin and the solid insert have generally matching coefficients of thermal expansion.

In some embodiments, the large cell core and the solid insert may be structurally bonded between the first and second skins and/or the large cell core may be structurally bonded to the adjacent portion of the side surface of the solid insert. In certain embodiments, the solid insert extends between first and second ends of at least one of the first and second skins. In other embodiments, the solid insert may be surrounded by the large cell core. In some embodiments, a plurality of solid inserts may be joined between and/or structurally bonded to the first and second skins. In certain embodiments, the solid insert may be a symmetrical solid insert, a non symmetrical solid insert and/or a solid insert with a void therein. In certain embodiments, the first skin, the solid insert and the second skin may include at least one opening extending therethrough.

In a second aspect, the present disclosure is directed to a method of forming a core stiffened panel. The method includes providing a first skin; disposing a large cell core on the first skin; locating a solid insert having a side surface on the first skin such that at least a portion of the side surface is adjacent to the large cell core; positioning a second skin on the large cell core and the solid insert opposite the first skin to form a panel assembly; and curing the panel assembly to join the large cell core to the first and second skins and to join the solid insert to the first and second skins, thereby forming the core stiffened panel.

The method may also include joining the large cell core to the solid insert; structurally bonding the large cell core to the first and second skins; structurally bonding the solid insert to the first and second skins; surrounding the solid insert with the large cell core; locating a plurality of solid inserts on the first skin and joining each of the solid inserts to the first and second skins and/or forming at least one opening extending through the first skin, the solid insert and the second skin.

In a third aspect, the present disclosure is directed to an airframe assembly for an aircraft. The airframe assembly includes a first airframe member having a first skin, a second skin, a large cell core joined between the first and second skins and a solid insert having a side surface. The solid insert is joined between the first and second skins such that at least a portion of the side surface is adjacent to the large cell core. The first skin has a first surface disposed opposite the solid insert. The airframe assembly also includes a second airframe member having a second surface. An adhesive joint is disposed between the first and second surfaces structurally bonding the first airframe member to the second airframe member such that the second airframe member is positioned opposite the solid insert.

In a fourth aspect, the present disclosure is directed to a wing assembly for an aircraft. The wing assembly includes a wing skin having an inner skin member, an outer skin member, a large cell core joined between the inner and outer skin members and a solid insert having a side surface. The solid insert is joined between the inner and outer skin members such that at least a portion of the side surface is adjacent to the large cell core. The inner skin member has a first surface disposed opposite the solid insert. The wing assembly also includes a rib having a second surface. An adhesive joint is disposed between the first and second surfaces structurally bonding the rib to the inner skin member of the wing skin such that the rib is positioned opposite the solid insert.

In a fifth aspect, the present disclosure is directed to an aircraft. The aircraft includes a first airframe member having a first skin, a second skin, a large cell core joined between the first and second skins and a solid insert having a side surface. The solid insert is joined between the first and second skins such that at least a portion of the side surface is adjacent to the large cell core. The first skin has a first surface disposed opposite the solid insert. The airframe assembly also includes a second airframe member having a second surface. An adhesive joint is disposed between the first and second surfaces structurally bonding the first airframe member to the second airframe member such that the second airframe member is positioned opposite the solid insert.

### BRIEF DESCRIPTION OF THE DRAWINGS

For a more complete understanding of the features and advantages of the present disclosure, reference is now made to the detailed description along with the accompanying figures in which corresponding numerals in the different figures refer to corresponding parts and in which:
Figures 1A-1B are schematic illustrations of a tiltrotor aircraft in a forward flight mode and in a vertical takeoff and landing flight mode, respectively, in accordance with embodiments of the present disclosure;
Figure 2 is an exploded view of a torque box structure of a wing of a tiltrotor aircraft in accordance with embodiments of the present disclosure;
Figure 3 is a flow diagram of a method of manufacturing a large cell core stiffened panel having solid inserts in accordance with embodiments of the present disclosure;
Figures 4A-4F are schematic illustrations of a method of manufacturing a large cell core stiffened panel having solid inserts in accordance with embodiments of the present disclosure;
Figures 5A-5B are top and cross sectional views of a large cell core for use in a large cell core stiffened panel having solid inserts in accordance with embodiments of the present disclosure;
Figure6 is a schematic illustration of a wing rib joined to a wing skin formed from a large cell core stiffened panel having solid inserts in accordance with embodiments of the present disclosure;
Figures 7A-7B are schematic illustrations of a large cell core stiffened panel having solid inserts in accordance with embodiments of the present disclosure;
Figures 8A-8B are schematic illustrations of a large cell core stiffened panel having solid inserts in accordance with embodiments of the present disclosure;
Figures 9A-9B are schematic illustrations of a large cell core stiffened panel having solid inserts in accordance with embodiments of the present disclosure;
Figures 10A-10B are schematic illustrations of a large cell core stiffened panel having solid inserts in accordance with embodiments of the present disclosure; and
Figures 11A-11B are schematic illustrations of a large cell core stiffened panel having solid inserts in accordance with embodiments of the present disclosure.

### DETAILED DESCRIPTION

While the making and using of various embodiments of the present disclosure are discussed in detail below, it should be appreciated that the present disclosure provides many applicable inventive concepts, which can be embodied in a wide variety of specific contexts. The specific embodiments discussed herein are merely illustrative and do not delimit the scope of the present disclosure, the scope of which is limited by the appendend claims. In the interest of clarity, not all features of an actual implementation may be described in the present disclosure. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present disclosure, the devices, members, apparatuses, and the like described herein may be positioned in any desired orientation. Thus, the use of terms such as "above," "below," "upper," "lower" or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

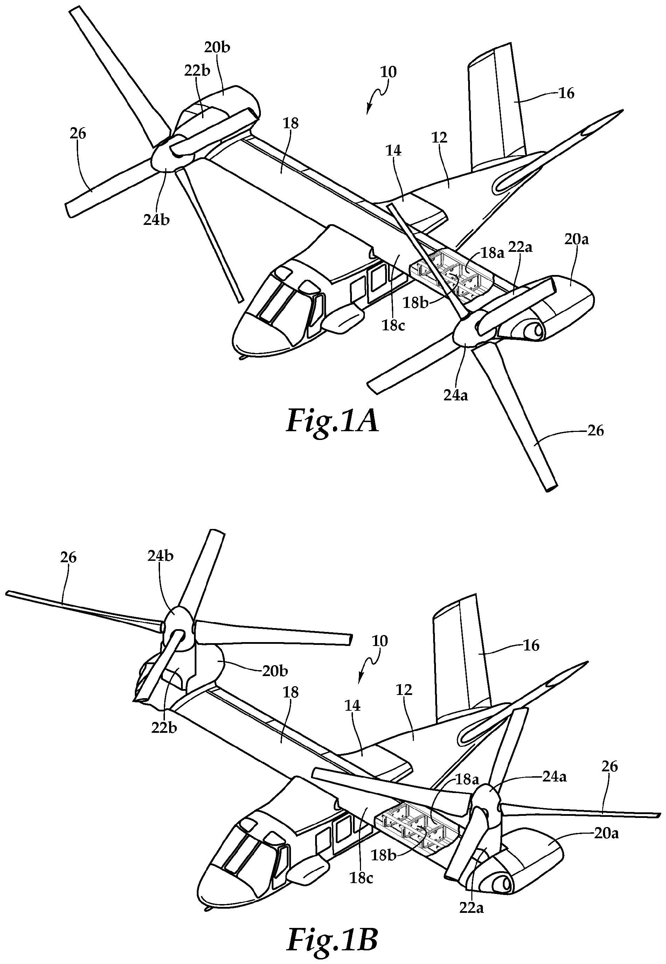

Referring to figures 1A-1B in the drawings, a tiltrotor aircraft is schematically illustrated and generally designated 10. Aircraft 10 includes a fuselage 12, a wing mount assembly 14 that is rotatable relative to fuselage 12 and a tail assembly 16 having control surfaces operable for horizontal and/or vertical stabilization during forward flight. A wing 18 is supported by wing mount assembly 14 and rotates with wing mount assembly 14 relative to fuselage 12 to enable tiltrotor aircraft 10 convert to a storage configuration. Together, fuselage 12, tail assembly 16 and wing 18 as well as their various frames, longerons, stringers, bulkheads, spars, ribs and skins such as aft wing spar 18a, wing ribs 18b and upper wing skin 18c, may be considered to be the airframe of tiltrotor aircraft 10. In the illustrated embodiment, the wing skins include large cell core stiffened panels having solid inserts at various load points that provide joining locations for wing ribs 18b.

Located proximate the outboard ends of wing 18 are fixed nacelles 20a, 20b, each of which preferably houses an engine and a fixed portion of a drive system. A pylon assembly 22a is rotatable relative to fixed nacelle 20a and wing 18 between a generally horizontal orientation, as best seen in figure 1A, a generally vertical orientation, as best seen in figure 1B. Pylon assembly 22a includes a rotatable portion of the drive system and a proprotor system 24a that is rotatable responsive to torque and rotational energy provided via the engine and drive system. Likewise, a pylon assembly 22b is rotatable relative to fixed nacelle 20b and wing 18 between a generally vertical orientation, as best seen in figure 1A, a generally horizontal orientation, as best seen in figure 1B. Pylon assembly 22b includes a rotatable portion of the drive system and a proprotor system 24b that is rotatable responsive to torque and rotational energy provided via the engine and drive system. In the illustrated embodiment, proprotor systems 24a, 24b each include four proprotor blades 26. It should be understood by those having ordinary skill in the art, however, that proprotor assemblies 24a, 24b could alternatively have a different number of proprotor blades, either less than or greater than four. In addition, it should be understood that the position of pylon assemblies 22a, 22b, the angular velocity or revolutions per minute (RPM) of the proprotor systems 24a, 24b, the pitch of proprotor blades 26 and the like are controlled by the pilot of tiltrotor aircraft 10 and/or the flight control system to selectively control the direction, thrust and lift of tiltrotor aircraft 10 during flight.

Figure 1A illustrates tiltrotor aircraft 10 in a forward flight mode or airplane flight mode, in which proprotor systems 24a, 24b are positioned to rotate in a substantially vertical plane to provide a forward thrust while a lifting force is supplied by wing 18 such that tiltrotor aircraft 10 flies much like a conventional propeller driven aircraft. Figure 1B illustrates tiltrotor aircraft 10 in a vertical takeoff and landing (VTOL) flight mode or helicopter flight mode, in which proprotor systems 24a, 24b are positioned to rotate in a substantially horizontal plane to provide a vertical thrust such that tiltrotor aircraft 10 flies much like a conventional helicopter. During operation, tiltrotor aircraft 10 may convert from helicopter flight mode to airplane flight mode following vertical takeoff and/or hover. Likewise, tiltrotor aircraft 10 may convert back to helicopter flight mode from airplane flight mode for hover and/or vertical landing. In addition, tiltrotor aircraft 10 can perform certain flight maneuvers with proprotor systems 24a, 24b positioned between airplane flight mode and helicopter flight mode, which can be referred to as conversion flight mode.

Preferably, each fixed nacelle 20a, 20b houses a drive system, such as an engine and transmission, for supplying torque and rotational energy to a respective proprotor system 24a, 24b. In such embodiments, the drive systems of each fixed nacelle 20a, 20b may be coupled together via one or more drive shafts located in wing 18 such that either drive system can serve as a backup to the other drive system in the event of a failure. Alternatively or additionally, fuselage 12 may include a drive system, such as an engine and transmission, for providing torque and rotational energy to each proprotor system 24a, 24b via one or more drive shafts located in wing 18. In tiltrotor aircraft having both nacelle and fuselage mounted drive systems, the fuselage mounted drive system may serve as a backup drive system in the event of failure of either or both of the nacelle mounted drive systems.

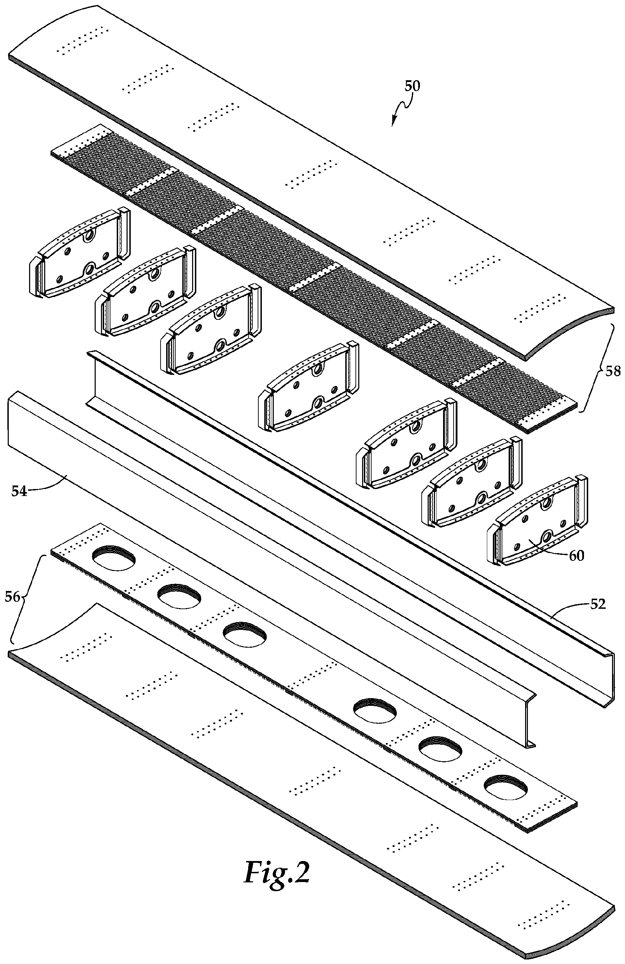

Referring next to figure 2 of the drawings, an exploded view of a torque box structure of wing 18 of tiltrotor aircraft 10 is depicted. Torque box structure 50 includes an aft spar 52, a forward spar 54, a lower skin assembly 56 including an outer skin member and an inner skin member with a large cell core and solid inserts joined therebetween, an upper skin assembly 58 including an outer skin member and an inner skin member with a large cell core and solid inserts joined therebetween, and a plurality of ribs 60. The various torque box components are may joined together by adhesive bonding or using aerospace fasteners such as pins, screws, rivets or other suitable fastening means to form torque box structure 50.

Various structural components of the an airframe such the outer and inner skin members, spars, ribs and the like may be formed from composite materials that may include numerous material plies composed of continuous filaments or fibers including one or more of glass, carbon, graphite, basalt, aromatic polyamide materials or the like and any combination thereof. The material plies may be in the form of fabrics such as woven fabrics, tape such as unidirectional tape and the like. The plies may be joined together with a resin such as a polymeric matrix including thermoplastic or thermosetting resin or any suitable resin system such as epoxies, polyimides, polyamides, bismaleimides, polyesters, vinyl esters, phenolics, polyetheretherketones (PEEK), polyetherketones (PEK), polyphenylene sulfides (PPS) and the like. Even though the methods of manufacture, the composites, the components and the subassemblies thereof are described herein in the context of a tiltrotor aircraft, it should be understood by those having ordinary skill in the art that the methods of manufacture, the composites, the components and the subassemblies thereof can be implemented on other aircraft including manned and unmanned aircraft.

In one example, the various airframe components may be formed using a layup process wherein a plurality of plies, which may be preimpregnated with an uncured resin, are placed in a mold or other support structure. The plies may have the same or different shapes, may be the same or different materials, may have the same or different fabric weaves, may have the same or different thicknesses, may be continuous or discontinuous, may extend beyond the periphery of the mold or be fully contained within the mold, may be oriented in the same or different directions and/or may have other similarities or differences. In one embodiment, the plies may be an intermediate modulus epoxy resin impregnated carbon fiber fabric that is stiffer than conventional composite fabrics, thereby allowing for fewer plies and reducing the weight and manufacturing cost. Each fabric layer is considered a ply of the laminate with the total number of plies ranging from between about 8 plies to about 100 plies for an outer skin member of a wing skin. In other airframe implementations, the total number of plies may be between about 10 plies to about 20 plies, between about 20 plies to about 30 plies, between about 20 plies to about 60 plies, between about 40 plies to about 60 plies and/or other suitable range or number of plies.

Following layup of the plies, the plies may be compacted to remove any pockets of air and to provide adequate attachment therebetween. The compacting step can be achieved by applying a vacuum to the plies in the mold or by pressing a second mold member on the plies. After the plies are compacted, the plies may be cured to form a laminate by heating the plies for two hours at 350 degrees Fahrenheit and at 90 psi, for example. Following the curing process, the laminate may be trimmed or otherwise machined as desired. This and/or similar processes may be used to form various components or subassemblies thereof for torque box structure 50 includes aft spar assembly 52, forward spar assembly 54, ribs 60 and/or the outer and inner skin members of lower skin assembly 56 and upper skin assembly 58.

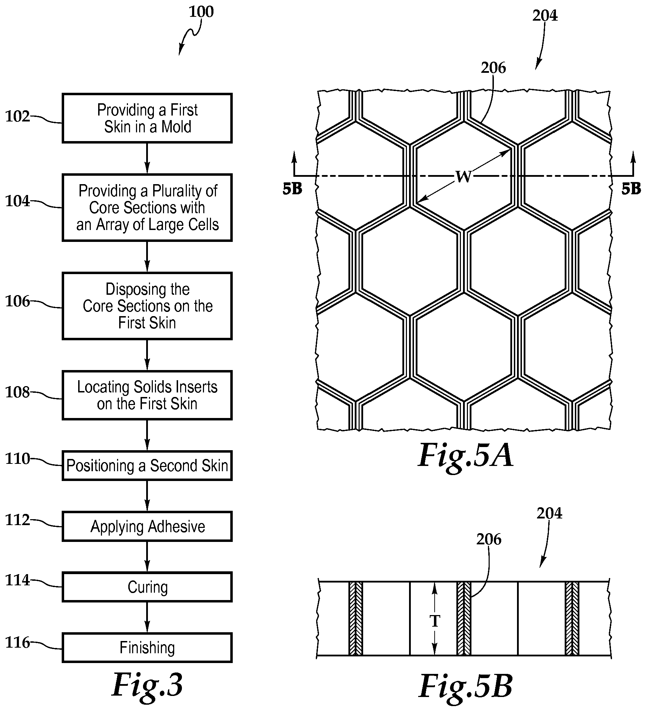

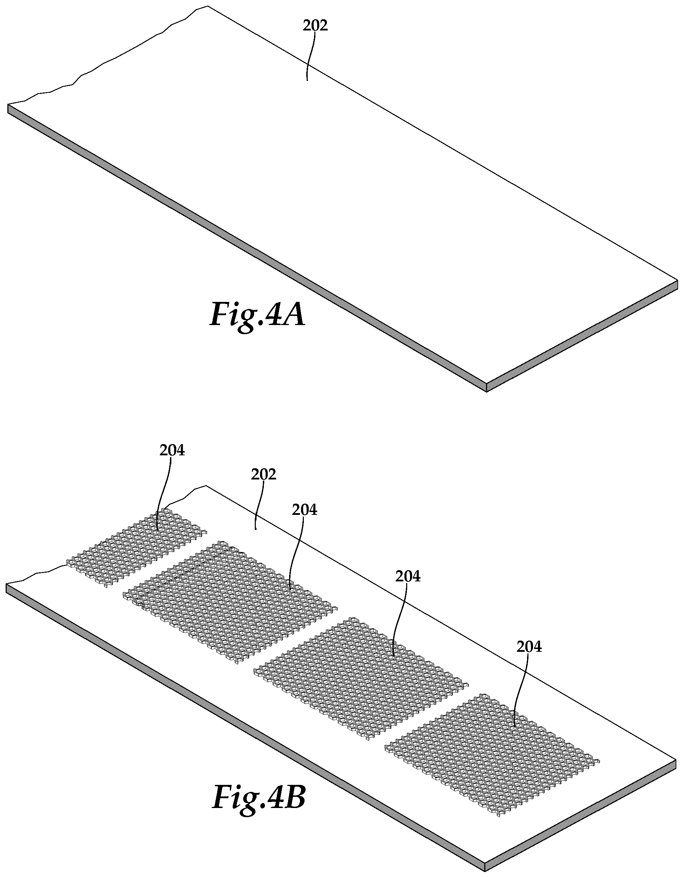

Referring next to figures 3 and 4A-4F, manufacturing steps associated with forming a lower wing skin assembly for a torque box structure of tiltrotor aircraft 10 will now be described. In step 102 of method 100, a first skin 202, as best seen in figure 4A, is placed in a mold or other secure structure (not pictured). First skin 202 is preferably a laminate formed from a plurality of material plies as discussed herein. In step 104, a plurality of large cell core sections 204 are provided. Large cell core sections 204 may be in the form of large cell honeycomb structures, wherein the term "honeycomb" means a material comprising a plurality of interconnected cell walls that define a plurality of cells. The cells may take the form of hexagonal cells, rectangular cells, square cells, flex-core cells, reinforced cells or the like. The term "large cell," for the purposes of this disclosure, means that each cell 206 has a width W of at least 0.0127 m (0.5 inches) (see figure 5A). For example, the width W of the large cells may be between about 0.0127 m (0.5 inches) and about 0.0381 m (1.5 inches) and preferably about 0.0254 m (1 inch). The thickness T of the large cells may be between about 0.00635 m (0.25 inches) and about 0.01905 m (0.75 inches) and preferably about 0.0127 m (0.5 inches) (see figure 5B). Even though particular width and thickness dimensions have been described for the cells of large cell core sections 204, those having ordinary skill in the art will recognize that cells having other dimensions both larger and smaller than those described are possible and are considered to be within the scope of the present disclosure.

Large cell core sections 204 may be formed from a variety of materials, including but not limited to, composite materials and metals. For example, the walls of large cell core sections 204 may be made from one or more material plies oriented in one or more directions and can be woven, unwoven or braided, for example. Large cell core sections 204 may be made of resin impregnated filaments or fibers composed of one or more of glass, carbon, graphite, basalt, aromatic polyamide materials or the like and any combination thereof. The resin may be a polymeric matrix including thermoplastic or thermosetting resin or any suitable resin system such as epoxies, polyimides, polyamides, bismaleimides, polyesters, vinyl esters, phenolics, polyetheretherketones (PEEK), polyetherketones (PEK), polyphenylene sulfides (PPS) and the like. Each large cell core section 204 may be cut or machined to any suitable size or shape including the illustrated rectangular shape. In the illustrated embodiment, each large cell core section 204 is constructed of similar material, shape and size but, in other embodiments, the plurality of large cell core sections 204 may include a variety of large cell core sections 204 having at least one different material, shape or size as compared to the other large cell core sections 204.

In step 106, the plurality of large cell core sections 204 are disposed on first skin 202, as best seen in figure 4B. In the illustrated embodiment, large cell core sections 204 are positioned generally along the longitudinal axis of first skin 202 within the periphery of first skin 202. In other embodiments, a single large cell core section 204 may extend spanwise across the entire length of first skin 202.

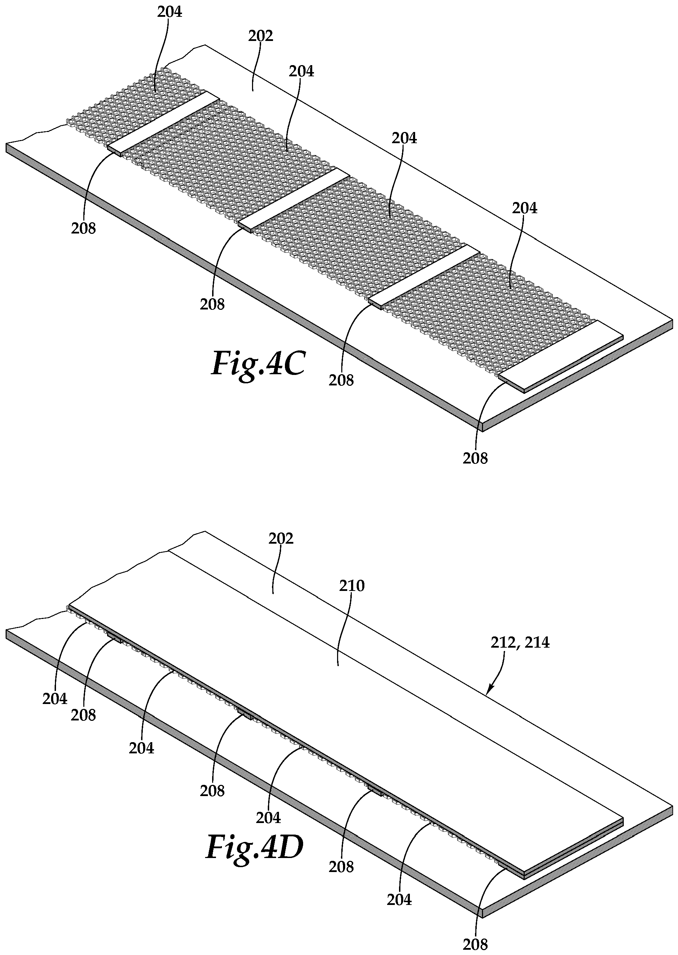

In step 108, a plurality of solid inserts 208 are located on first skin 202 such that at least a portion of a side surface of each solid insert 208 is adjacent to at least one of the large cell core sections 204, as best seen in figure 4C. Solid inserts 208 may be formed from a variety of materials, including but not limited to, composite materials and metals. For example, solid inserts 208 may include numerous material plies composed of continuous filaments or fibers including one or more of glass, carbon, graphite, basalt, aromatic polyamide materials or the like and any combination thereof. Solid inserts 208 may include material plies in the form of fabrics such as woven fabrics, tape such as unidirectional tape and the like. The plies may be joined together with a resin such as a polymeric matrix including thermoplastic or thermosetting resin or any suitable resin system such as epoxies, polyimides, polyamides, bismaleimides, polyesters, vinyl esters, phenolics, polyetheretherketones (PEEK), polyetherketones (PEK), polyphenylene sulfides (PPS) and the like. Each solid insert 208 may be cut or machined to any suitable size or shape including the illustrated rectangular shape. Each solid insert 208 may alternatively be a compression molded material that is molded in the desired shape. For example, the compression molded material can be a curable moldable material, such as thermosetting resins and advanced composite thermoplastics with unidirectional tapes, woven fabrics, randomly orientated fiber mat or chopped strand. Solid inserts 208 may be butt jointed to the adjacent large cell core sections 204 using a foaming adhesive or other suitable jointing method, if desired. Regardless of the selected materials or processes, first skin 202, solid inserts 208 and second skin 210 preferably have generally matching coefficients of thermal expansion.

In step 110, second skin 210 is positioned onto solid inserts 208 and large cell core sections 204, as best seen in figure 4D. In the illustrated embodiment, second skin 210 is a laminate formed from the same materials and processes as first skin 202. In other embodiments, however, second skin 210 could be formed from other materials and by other processes. In the illustrated embodiment, second skin 210 is aligned with the outer edges of solid inserts 208 and large cell core sections 204. In other embodiments, second skin 210 could have a different length and/or width then solid inserts 208 and/or large cell core sections 204.

In step 112, one or more adhesives or adhesive layers are applied to the upper surface of large cell core sections 204, the lower surface of large cell core sections 204, the upper surface of solid inserts 208, the lower surface of solid inserts 208, the upper surface of first skin 202 and/or the lower surface of second skin 210. This step may take place at any suitable interval or intervals between step 102 and step 110 such that the adhesive is disposed between the lower surface of large cell core sections 204 and first skin 202, the lower surface of solid inserts 208 and first skin 202, the upper surface of large cell core sections 204 and second skin 210 as well as the upper surface of solid inserts 208 and second skin 210. In the illustrated embodiment, the adhesive may be reticulated to provide fillets of adhesive between first skin 202, large cell core sections 204 and second skin 210. At this stage, first skin 202, large cell core sections 204, solid inserts 208 and second skin 210 may be referred to as a panel assembly 212 and/or an uncured panel assembly.

In step 114, panel assembly 212, which may be represent by figure 4D, is cured under heat and pressure. For example, panel assembly 212 may be cured for about 2 hours at 250 degrees Fahrenheit at a pressure above ambient pressure, depending upon the adhesive or adhesives being cured. Following the curing step, large cell core sections 204 are joined between first skin 202 and second skin 210 and are preferably structurally bonded between first skin 202 and second skin 210. In addition, solid inserts 208 are joined between first skin 202 and second skin 210 and are preferably structurally bonded between first skin 202 and second skin 210. Also, if adhesive has been placed between adjacent portions of solid inserts 208 and large cell core sections 204, then solid inserts 208 are joined with large cell core sections 204 and are preferably structurally bonded with large cell core sections 204. In the illustrated embodiment, step 114 involves co-curing of solid inserts 208 and large cell core sections 204 with first skin 202 and second skin 210.

Once panel assembly 212 is cured, first skin 202, large cell core sections 204, solid inserts 208 and second skin 210 may be referred to as a large cell core stiffened panel 214 having solid inserts 208, which may also be represent by figure 4D. Importantly, the solid inserts 208 provide a load path between first skin 202 and second skin 210. In addition, solid inserts 208 provide a large bonding surface for joining with first skin 202 and second skin 210 which reduces to potential for first skin 202 and/or second skin 210 from peeling away from large cell core sections 204. In certain implementations, solid inserts 208 may provide a fluid barrier to limit fluid intrusion, such as fuel, water and hydraulic fluid into large cell core sections 204.

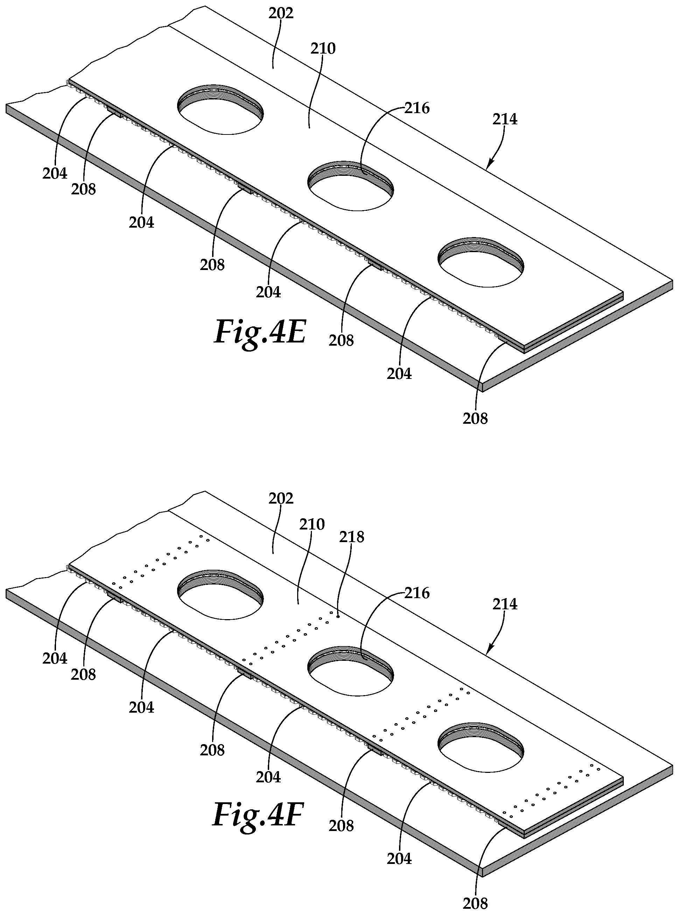

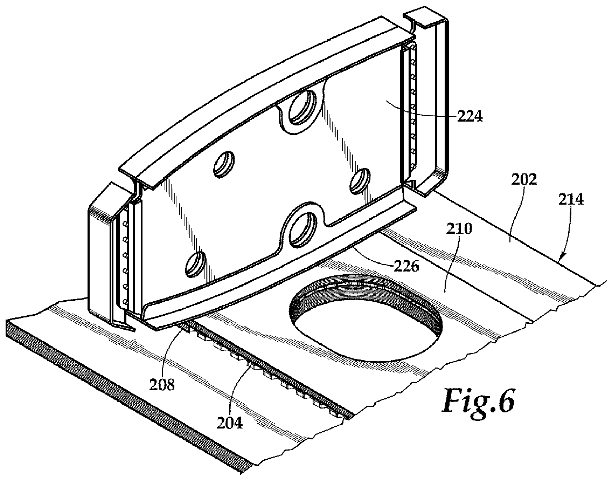

Based upon the intended implementation for large cell core stiffened panel 214, additional finishing steps may be desired. In the illustrated embodiment wherein large cell core stiffened panel 214 is a lower wing skin assembly, step 116 includes machining or otherwise removing cutouts 216 to provide fuel cell access, as best seen in figure 4E. In addition, as best seen in figure 4F, a plurality of holes 218 may be drilled through first skin 202, solid inserts 208 and second skin 210 to provide joining locations for coupling other airframe components to large cell core stiffened panel 214. As best seen in figure 6, an adhesive joint 226 is disposed between wing rib 224 and large cell core stiffened panel 214 such that a lower surface of wing rib 224 is structurally bonded to an upper surface of large cell core stiffened panel 214. As illustrated, wing rib 224 is joined to large cell core stiffened panel 214 such that wing rib 224 is opposite a solid insert 208. Thus, the load applied to large cell core stiffened panel 214 by wing rib 224 during operation of aircraft 10 is received at a solid insert 208, which is an ultra stiff load point within large cell core stiffened panel 214.

It is noted that the use of large cell core stiffened panels 214 as upper wing skin 58 and lower wing skin 56 of torque box structure 50 advantageously provides a narrow profile for the large cell core stiffened wing skin that does not include any or require any conventional stringers, thereby providing improved fuel bay clearance. In addition, the use of large cell core stiffened panels 214 as upper wing skin 58 and lower wing skin 56 improves the strength of torque box structure 50 including improved stiffness and torsional support during the shearing motion produced by proprotors 24a, 24b. The use of large cell core stiffened panels 214 results in a lower cost for manufacturing torque box structure 50 due to reduced tooling and labor requirements, a reduction in the part count and less intricate installation procedures such as a reduction in foam fillet installation. Further, the use of large cell core stiffened panels 214 as upper wing skin 58 and lower wing skin 56 reduces the number of quality defects as compared to prior art implementations.

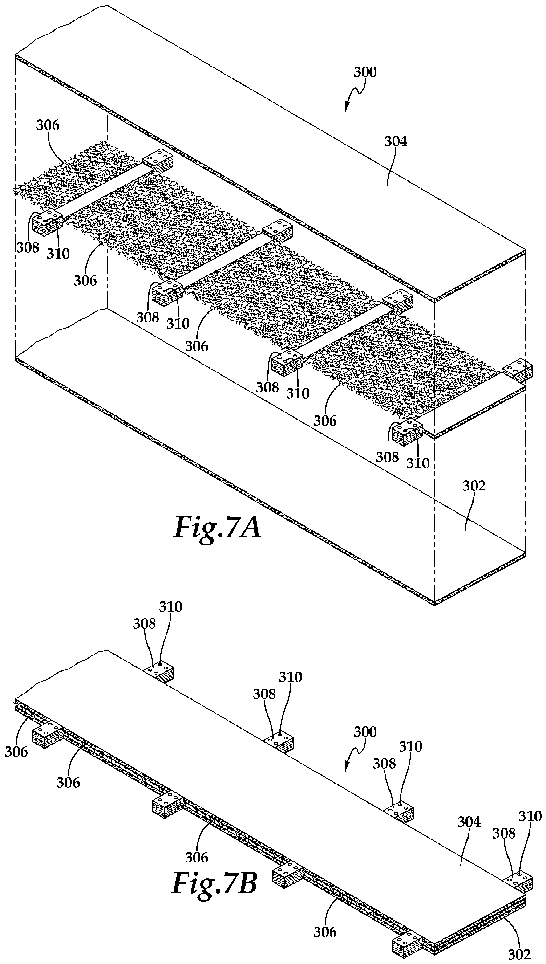

Referring next to figures 7A-7B, therein is depicted a large cell core stiffened panel having solid inserts that is generally designated 300. Panel 300 includes a first skin 302 and a second skin 304 that are preferably laminates formed from a plurality of material plies as discussed herein. A plurality of large cell core sections 306 are joined between first skin 302 and second skin 304 and are preferably structurally bonded between first skin 302 and second skin 304 as discussed herein. Large cell core sections 306 are preferably composite honeycomb structures as discussed herein. A plurality of solid inserts 308 are joined between first skin 302 and second skin 304 and are preferably structurally bonded between first skin 302 and second skin 304 as discussed herein. Solid inserts 308 are preferably composite and/or compression molded inserts as discussed herein that have generally matching coefficients of thermal expansion with first skin 302 and second skin 304. In the illustrated embodiment, solid inserts 308 extend outwardly beyond the side surfaces of first skin 302 and second skin 304. In addition, the outwardly extending ends of solid inserts 308 are enlarged such that the upper and lower surfaces of the outwardly extending ends of solid inserts 308 are generally flush with the lower surface of first skin 302 and the upper surface of second skin 304. Each of the outwardly extending ends of solid inserts 308 includes a plurality of holes 310 to provide joining locations for coupling other components to large cell core stiffened panel 300.

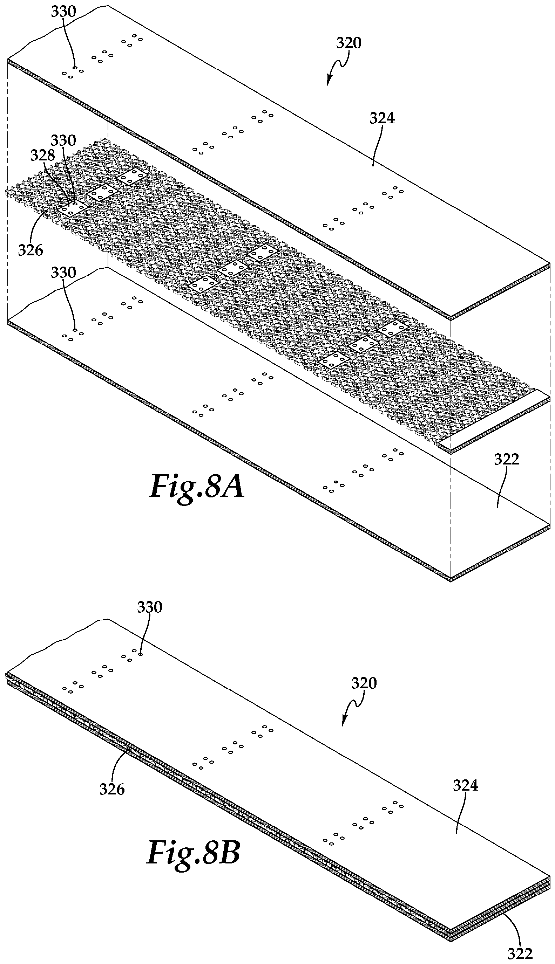

Referring next to figures 8A-8B, therein is depicted a large cell core stiffened panel having solid inserts that is generally designated 320. Panel 320 includes a first skin 322 and a second skin 324 that are preferably laminates formed from a plurality of material plies as discussed herein. A large cell core section 326 is joined between first skin 322 and second skin 324 and is preferably structurally bonded between first skin 322 and second skin 324 as discussed herein. Large cell core section 326 is preferably a composite honeycomb structure as discussed herein. A plurality of solid inserts 328 are joined between first skin 322 and second skin 324 and are preferably structurally bonded between first skin 322 and second skin 324 as discussed herein. Solid inserts 328 are preferably composite and/or compression molded inserts as discussed herein that have generally matching coefficients of thermal expansion with first skin 322 and second skin 324. In the illustrated embodiment, each of solid inserts 328 is positioned within a cutout of large cell core section 326 and is fully surrounded by large cell core section 326. In addition, the side surfaces of each solid insert 328 may be joined with and/or structurally bonded to the adjacent portions of large cell core section 326. First skin 322, solid inserts 328 and second skin 324 include a plurality of holes 330 to provide joining locations for coupling other components to large cell core stiffened panel 320.

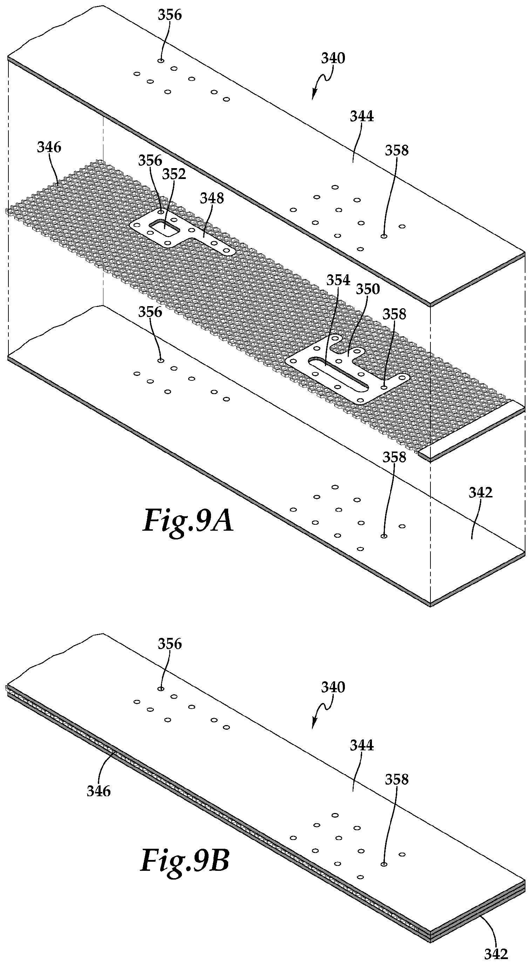

Even though the solid inserts of the present disclosure have been depicted as symmetric solid inserts, it should be understood by those having ordinary skill in the art that the solid inserts of the present disclosure could have any shape including non symmetric shapes. For example, as best seen in figures 9A-9B, a large cell core stiffened panel 340 includes non symmetric solid inserts. Panel 340 includes a first skin 342 and a second skin 344 that are preferably laminates formed from a plurality of material plies as discussed herein. A large cell core section 346 is joined between first skin 342 and second skin 344 and is preferably structurally bonded between first skin 342 and second skin 344 as discussed herein. Large cell core section 346 is preferably a composite honeycomb structure as discussed herein. Solid inserts 348, 350 are joined between first skin 342 and second skin 344 and are preferably structurally bonded between first skin 342 and second skin 344 as discussed herein. Solid inserts 348, 350 are preferably composite and/or compression molded inserts as discussed herein that have generally matching coefficients of thermal expansion with first skin 342 and second skin 344. In the illustrated embodiment, each of solid inserts 348, 350 is positioned within a cutout of large cell core section 346 and is fully surrounded by large cell core section 346 such that the outer surfaces of solid inserts 348, 350 may be joined with and/or structurally bonded to the adjacent portions of large cell core section 346. Solid insert 348 includes a central void 352 and solid insert 350 includes a central void 354 that enable reduction in the weight of solid inserts 348, 350. First skin 342, solid insert 348 and second skin 344 include a plurality of holes 356 to provide joining locations for coupling other components to large cell core stiffened panel 340. Likewise, first skin 342, solid insert 350 and second skin 344 include a plurality of holes 358 to provide joining locations for coupling other components to large cell core stiffened panel 340.

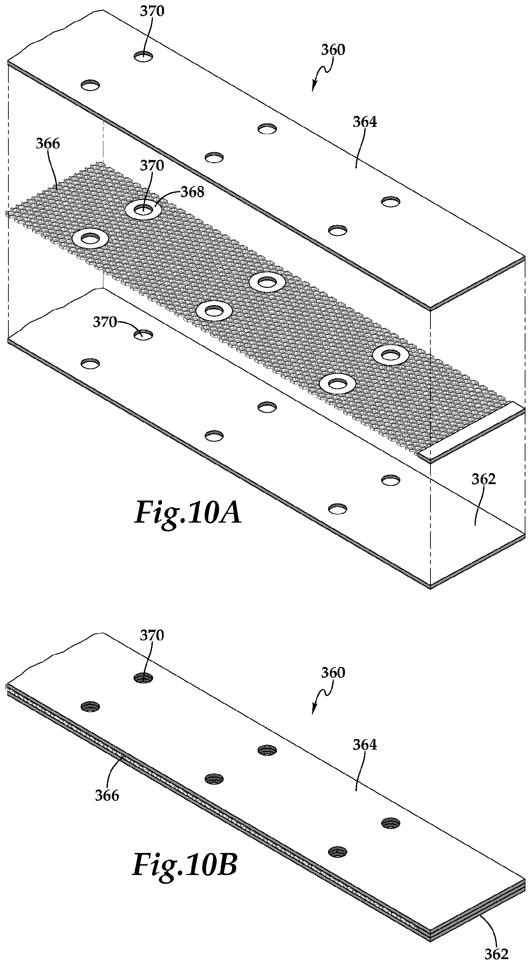

Referring next to figures 10A-10B, therein is depicted a large cell core stiffened panel having solid inserts that is generally designated 360. Panel 360 includes a first skin 362 and a second skin 364 that are preferably laminates formed from a plurality of material plies as discussed herein. A large cell core section 366 is joined between first skin 362 and second skin 364 and is preferably structurally bonded between first skin 362 and second skin 364 as discussed herein. Large cell core section 366 is preferably a composite honeycomb structure as discussed herein. A plurality of solid inserts 368 are joined between first skin 362 and second skin 364 and are preferably structurally bonded between first skin 362 and second skin 364 as discussed herein. Solid inserts 368 are preferably composite and/or compression molded inserts as discussed herein that have generally matching coefficients of thermal expansion with first skin 362 and second skin 364. In the illustrated embodiment, each of solid inserts 368 is positioned within a cutout of large cell core section 366 and is fully surrounded by large cell core section 366. In addition, the side surfaces of each solid insert 368 may be joined with and/or structurally bonded to the adjacent portions of large cell core section 366. In the illustrated embodiment, solid insert 368 each include a pass through opening 370 which may be preformed in solid inserts 368 or formed together with corresponding portions of pass through openings 370 in first skin 362 and second skin 364. Pass through openings 370 may provide locations for fluid lines, electrical lines, data cables or the like to pass through panel 360.

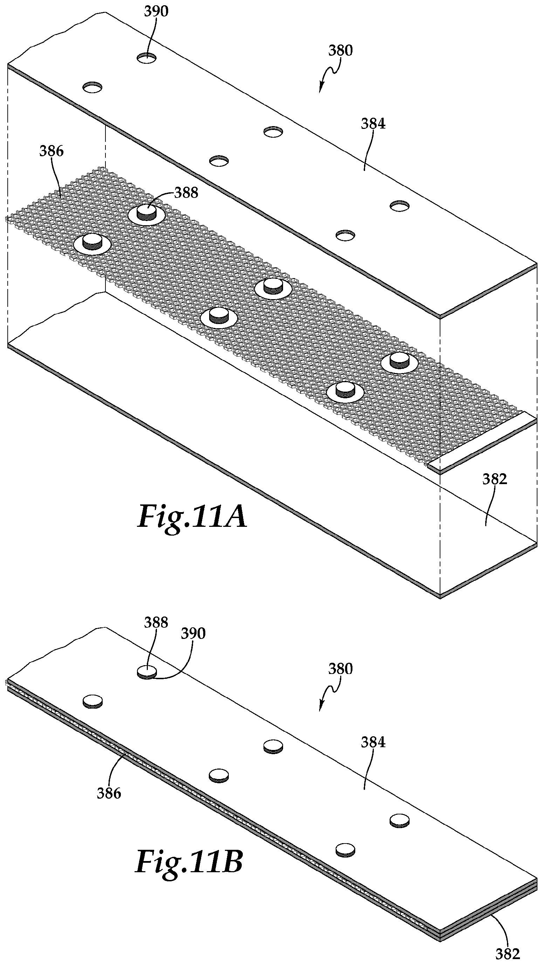

Referring next to figures 11A-11B, therein is depicted a large cell core stiffened panel having solid inserts that is generally designated 380. Panel 380 includes a first skin 382 and a second skin 384 that are preferably laminates formed from a plurality of material plies as discussed herein. A large cell core section 386 is joined between first skin 382 and second skin 384 and is preferably structurally bonded between first skin 382 and second skin 384 as discussed herein. Large cell core section 386 is preferably a composite honeycomb structure as discussed herein. A plurality of solid inserts 388 are joined to first skin 382 and second skin 384 and are preferably structurally bonded to first skin 382 and second skin 384 as discussed herein. Solid inserts 388 are preferably composite and/or compression molded inserts as discussed herein that have generally matching coefficients of thermal expansion with first skin 382 and second skin 384. In the illustrated embodiment, each of solid inserts 388 is positioned within a cutout of large cell core section 386 and is fully surrounded by large cell core section 386. In addition, the side surfaces of each solid insert 388 may be joined with and/or structurally bonded to the adjacent portions of large cell core section 386. In the illustrated embodiment, solid insert 388 each include a cylindrical extension that passes through a precut opening 390 in second skin 384 such that the side surfaces of each cylindrical extension may be joined with and/or structurally bonded to the adjacent side surfaces of openings 390. The cylindrical extensions may provide joining locations for coupling other components to large cell core stiffened panel 380.

The foregoing description of embodiments of the disclosure has been presented for purposes of illustration and description. It is not intended to be exhaustive or to limit the disclosure to the precise form disclosed, and modifications and variations are possible in light of the above teachings or may be acquired from practice of the disclosure. The embodiments were chosen and described in order to explain the principals of the disclosure and its practical application to enable one skilled in the art to utilize the disclosure in various embodiments and with various modifications as are suited to the particular use contemplated. Other substitutions, modifications, changes and omissions may be made in the design, operating conditions and arrangement of the embodiments without departing from the scope of the present disclosure. Such modifications and combinations of the illustrative embodiments as well as other embodiments will be apparent to persons skilled in the art upon reference to the description.

## Claims

1. An airframe assembly for an aircraft (10) comprising:
an upper wing skin assembly (58) having a composite laminate inner skin (210) and a composite laminate outer skin (202) with a plurality of large cell core sections (204) and a plurality of solid inserts (208) that are co-cured together such that the large cell core sections (204) and the solid inserts (208) are structurally bonded between the inner and outer skins (210, 202) and structurally bonded together;
a lower wing skin assembly (56) having a composite laminate inner skin (210) and a composite laminate outer skin (202) with a plurality of large cell core sections (204) and a plurality of solid inserts (208)that are co-cured together such that the large cell core sections (204) and the solid inserts (208) are structurally bonded between the inner and outer skins (210, 202) and structurally bonded together;
a plurality of wing ribs (220) disposed between the upper and lower wing skin assemblies (58, 56); and
a plurality of adhesive joints (226) each disposed between one of the wing ribs (220) and one of the upper and lower wing skin assemblies (58, 56) structurally bonding each of the wing ribs (220) between the upper and lower wing skin assemblies (58, 56) such that each of the wing ribs (220) is structurally bonding to the upper wing skin assembly (58) opposite one of the solid inserts (208) and structurally bonding to the lower wing skin assembly (56) opposite one of the solid inserts (208).

2. The airframe assembly as recited in claim 1, wherein the large cell core sections (204) are selected from the group consisting of large cell composite cores and large cell carbon cores.

3. The airframe assembly as recited in any preceding claim, wherein the inner skins (210), the outer skins (202) and the solid inserts (208) further comprise carbon composite materials.

4. The airframe assembly as recited in any preceding claim, wherein the inner skins (210), the outer skins (202) and the solid inserts (208) have generally matching coefficients of thermal expansion.

5. The airframe assembly as recited in any preceding claim, wherein cells (206) of the large cell core sections (204) have a width (W) between 1.27 cm (0.5 inches) and 3.81 cm (1.5 inches).

6. An aircraft (10) comprising:
a fuselage (12); and
a wing (18) supported by the fuselage (12),
wherein the wing (18) comprises the airframe assembly according to any preceding claim.

7. The airframe assembly as recited in any preceding claim except claim 6, wherein cells (206) of the large cell core sections (204) have a width (W) of about 2.54 cm.

8. The airframe assembly as recited in any preceding claim except claim 6, wherein cells (206) of the large cell core sections (204) have a thickness (T) of between 0.635 and 1.905 cm.

9. The airframe assembly as recited in any preceding claim except claim 6, wherein cells (206) of the large cell core sections (204) have a thickness (T) of about 1.27 cm.

10. The airframe assembly as recited in any preceding claim except claim 6, wherein cells (206) of the large cell core sections (204) further comprise honeycomb cells, rectangular cells, square cells or flex-core cells.

11. The airframe assembly as recited in any preceding claim except claim 6, wherein the solid inserts (208) provide ultra stiff load points for structurally bonding the wing ribs (220) between the upper and lower wing skin assemblies (58, 56).

12. The airframe assembly as recited in any preceding claim except claim 6, wherein the solid inserts (208) further comprise metal solid inserts (208).

13. The airframe assembly as recited in any preceding claim except claim 6, wherein the solid inserts (208) further comprise compression molded solid inserts (208).

14. The airframe assembly as recited in any preceding claim except claim 6, further comprising an aft spar (52) coupled to an aft portion of each of the wing ribs (220) and a forward spar (54) coupled to a forward portion of each of the wing ribs (220) to form a torque box structure for an aircraft wing.

## Patentansprüche

1. Flugwerkbaugruppe für ein Luftfahrzeug (10), umfassend:
eine obere Flügelschalenbaugruppe (58), die eine Verbundlaminatinnenschale (210) und eine Verbundlaminataußenschale (202) aufweist, mit einer Vielzahl von großzelligen Kernabschnitten (204) und einer Vielzahl von festen Einsätzen (208), die derart mit einander zusammengehärtet sind, dass die großzelligen Kernabschnitte (204) und die festen Einsätze (208) zwischen den Innen- und Außenschalen (210, 202) strukturell gebonded sind und strukturell zusammengebondet sind;
eine untere Flügelschalenbaugruppe (56), die eine Verbundlaminatinnenschale (210) und eine Verbundlaminataußenschale (202) aufweist, mit einer Vielzahl von großzelligen Kernabschnitten (204) und einer Vielzahl von festen Einsätzen (208), die derart mit einander zusammengehärtet sind, dass die großzelligen Kernabschnitte (204) und die festen Einsätze (208) zwischen den Innen- und Außenschalen (210, 202) strukturell gebonded sind und strukturell zusammengebondet sind;
eine Vielzahl von Flügelrippen (220), die zwischen den oberen und unteren Flügelschalenbaugruppen (58, 56) angeordnet sind; und
eine Vielzahl von Haftverbindungen (226), die jeweils zwischen einer der Flügelrippen (220) und einer der oberen und unteren Flügelschalenbaugruppen (58, 56) angeordnet sind, die jede der Flügelrippen (220) zwischen den oberen und unteren Flügelschalenbaugruppen (58, 56) derart strukturell bonden, dass jede der Flügelrippen (220) mit der oberen Flügelschalenbaugruppe (58) gegenüber von einem der festen Einsätze (208) strukturell bondet, und mit der unteren Flügelschalenbaugruppe (56) gegenüber von einem der festen Einsätze (208) strukturell bondet.

2. Flugwerkbaugruppe nach Anspruch 1, wobei die großzelligen Kernabschnitte (204) ausgewählt sind aus der Gruppe bestehend aus großzelligen Verbundkernen und großzelligen Kohlenstoffkernen.

3. Flugwerkbaugruppe nach einem der vorstehenden Ansprüche, wobei die inneren Schalen (210), die äußeren Schalen (202) und die festen Einsätze (208) weiter Kohlenstoffverbundmaterialien umfassen.

4. Flugwerkbaugruppe nach einem der vorstehenden Ansprüche, wobei die inneren Schalen (210), die äußeren Schalen (202) und die festen Einsätze (208) allgemein zu einander passende Wärmeausdehnungskoeffizienten aufweisen.

5. Flugwerkbaugruppe nach einem der vorstehenden Ansprüche, wobei die Zellen (206) der großzelligen Kernabschnitte (204) eine Breite (W) von zwischen 1,27 cm (0,5 Zoll) und 3,81 cm (1,5 Zoll) aufweisen.

6. Luftfahrzeug (10) umfassend:
einen Rumpf (12); und
einen Flügel (18), der von dem Rumpf (12) getragen wird,
wobei der Flügel (18) die Flugwerkbaugruppe nach einem der vorstehenden Ansprüche umfasst.

7. Flugwerkbaugruppe nach einem der vorstehenden Ansprüche mit Ausnahme von Anspruch 6, wobei die Zellen (206) der großzelligen Kernabschnitte (204) eine Breite (W) von etwa 2,54 cm aufweisen.

8. Flugwerkbaugruppe nach einem der vorstehenden Ansprüche mit Ausnahme von Anspruch 6, wobei die Zellen (206) der großzelligen Kernabschnitte (204) eine Dicke (T) von zwischen 0,635 cm und 1,905 cm aufweisen.

9. Flugwerkbaugruppe nach einem der vorstehenden Ansprüche mit Ausnahme von Anspruch 6, wobei die Zellen (206) der großzelligen Kernabschnitte (204) eine Dicke (T) von etwa 1,27 cm aufweisen.

10. Flugwerkbaugruppe nach einem der vorstehenden Ansprüche mit Ausnahme von Anspruch 6, wobei die Zellen (206) der großzelligen Kernabschnitte (204) weiter Bienenwabenzellen, rechteckige Zellen, quadratische Zellen oder Flexkernzellen umfassen.

11. Flugwerkbaugruppe nach einem der vorstehenden Ansprüche mit Ausnahme von Anspruch 6, wobei die festen Einsätze (208) ultrasteife Lastpunkte zum strukturellen Bonden der Flügelrippen (220) zwischen den oberen und unteren Flügelschalenbaugruppen (58, 56) bereitstellen.

12. Flugwerkbaugruppe nach einem der vorstehenden Ansprüche mit Ausnahme von Anspruch 6, wobei die festen Einsätze (208) weiter metallische feste Einsätze (208) umfassen.

13. Flugwerkbaugruppe nach einem der vorstehenden Ansprüche mit Ausnahme von Anspruch 6, wobei die festen Einsätze (208) weiter formgepresste feste Einsätze (208) umfassen.

14. Flugwerkbaugruppe nach einem der vorstehenden Ansprüche mit Ausnahme von Anspruch 6, weiter umfassend einen hinteren Holm (52), der mit einem hinteren Bereich von jeder der Flügelrippen (220) gekoppelt ist, und einen vorderen Holm (54), der mit einem vorderen Bereich von jeder der Flügelrippen (220) gekoppelt ist, um eine Drehmomentkastenstruktur für einen Flügel eines Luftfahrzeugs zu bilden.

## Revendications

1. Ensemble cellule pour un aéronef (10) comprenant :
un ensemble revêtement d'aile supérieur (58) ayant un revêtement intérieur stratifié composite (210) et un revêtement extérieur stratifié composite (202) avec une pluralité de sections noyaux à grandes alvéoles (204) et une pluralité d'inserts solides (208) qui sont co-durcis ensemble de telle sorte que les sections noyaux à grandes alvéoles (204) et les inserts solides (208) sont structurellement liés entre les revêtements intérieur et extérieur (210, 202) et structurellement liés ensemble ;
un ensemble revêtement d'aile inférieur (56) ayant un revêtement intérieur stratifié composite (210) et un revêtement extérieur stratifié composite (202) avec une pluralité de sections noyaux à grandes alvéoles (204) et une pluralité d'inserts solides (208) qui sont co-durcis ensemble de telle sorte que les sections noyaux à grandes alvéoles (204) et les inserts solides (208) sont structurellement liés entre les revêtements intérieur et extérieur (210, 202) et structurellement liés ensemble ;
une pluralité de nervures d'aile (220) disposées entre les ensembles revêtements d'aile supérieur et inférieur (58, 56) ; et
une pluralité de raccords adhésifs (226) disposés chacun entre l'une des nervures d'aile (220) et l'un des ensembles revêtements d'aile supérieur et inférieur (58, 56) liant structurellement chacune des nervures d'aile (220) entre les ensembles revêtements d'aile supérieur et inférieur (58, 56) de telle sorte que chacune des nervures d'aile (220) se lie structurellement à l'ensemble revêtement d'aile supérieur (58) opposé à l'un des inserts solides (208) et se lie structurellement à l'ensemble revêtement d'aile inférieur (56) opposé à l'un des inserts solides (208).

2. Ensemble cellule selon la revendication 1, dans lequel les sections noyaux à grandes alvéoles (204) sont sélectionnées à partir du groupe constitué par des noyaux composites à grandes alvéoles et des noyaux de carbone à grandes alvéoles.

3. Ensemble cellule selon l'une quelconque des revendications précédentes, dans lequel les revêtements intérieurs (210), les revêtements extérieurs (202) et les inserts solides (208) comprennent en outre des matériaux composites de carbone.

4. Ensemble cellule selon l'une quelconque des revendications précédentes, dans lequel les revêtements intérieurs (210), les revêtements extérieurs (202) et les inserts solides (208) ont des coefficients de dilatation thermique correspondant généralement.

5. Ensemble cellule selon l'une quelconque des revendications précédentes, dans lequel des alvéoles (206) des sections noyaux à grandes alvéoles (204) ont une largeur (W) entre 1,27 cm (0,5 pouce) et 3,81 cm (1,5 pouce).

6. Aéronef (10) comprenant :
un fuselage (12) ; et
une aile (18) supportée par le fuselage (12),
dans lequel l'aile (18) comprend l'ensemble cellule selon l'une quelconque des revendications précédentes.

7. Ensemble cellule selon l'une quelconque des revendications précédentes à l'exception de la revendication 6, dans lequel des alvéoles (206) des sections noyaux à grandes alvéoles (204) ont une largeur (W) d'environ 2,54 cm.

8. Ensemble cellule selon l'une quelconque des revendications précédentes à l'exception de la revendication 6, dans lequel des alvéoles (206) des sections noyaux à grandes alvéoles (204) ont une épaisseur (T) entre 0,635 et 1,905 cm.

9. Ensemble cellule selon l'une quelconque des revendications précédentes à l'exception de la revendication 6, dans lequel des alvéoles (206) des sections noyaux à grandes alvéoles (204) ont une épaisseur (T) d'environ 1,27 cm.

10. Ensemble cellule selon l'une quelconque des revendications précédentes à l'exception de la revendication 6, dans lequel des alvéoles (206) des sections noyaux à grandes alvéoles (204) comprennent en outre des alvéoles en nid-d'abeilles, des alvéoles rectangulaires, des alvéoles carrées ou des alvéoles à noyau flexible.

11. Ensemble cellule selon l'une quelconque des revendications précédentes à l'exception de la revendication 6, dans lequel les inserts solides (208) fournissent des points de charge ultra rigides pour lier structurellement les nervures d'aile (220) entre les ensembles revêtements d'aile supérieur et inférieur (58, 56).

12. Ensemble cellule selon l'une quelconque des revendications précédentes à l'exception de la revendication 6, dans lequel les inserts solides (208) comprennent en outre des inserts solides métalliques (208).

13. Ensemble cellule selon l'une quelconque des revendications précédentes à l'exception de la revendication 6, dans lequel les inserts solides (208) comprennent en outre des inserts solides moulés par compression (208).

14. Ensemble cellule selon l'une quelconque des revendications précédentes à l'exception de la revendication 6, comprenant en outre un longeron arrière (52) accouplé à une partie arrière de chacune des nervures d'aile (220) et un longeron avant (54) accouplé à une partie avant de chacune des nervures d'aile (220) pour former une structure de caisson de torsion pour une aile d'aéronef.
